# EUROPÄISCHE PATENTSCHRIFT

(11) **EP 0 488 012 B1**
(45) Veröffentlichungstag und Bekanntmachung des Hinweises auf die Patenterteilung: **23.08.1995**
(21) Anmeldenummer: 91119640.0
(22) Anmeldetag: 18.11.1991
(51) Int. Cl.: A21D 4/00, A21D 6/00, A23L 3/015, A23L 3/3409

(54) **Verfahren zur Keimreduktion in Mehl enthaltenden Halbfertigprodukten**
Process for reducing germination in a semi-prepared product containing flour
Procédé pour la réduction de germination dans un produit demi-fini contenant de la farine

(30) Priorität: 26.11.1990 DE 4037499
(43) Veröffentlichungstag der Anmeldung: 03.06.1992
(73) Patentinhaber: JUCHEM GmbH, D-66565 Eppelborn (DE)
(72) Erfinder: Juchem, Franz-Josef, W-6686 Eppelborn (DE)
(74) Vertreter: Vièl, Georg, Dipl.-Ing.

(56) Entgegenhaltungen:
- EP-A- 0 363 341
- WO-A-90/02799
- CH-A- 151 292
- DE-A- 3 734 025
- LU-A- 71 446
- NL-A- 6 413 653

## Beschreibung

Die Erfindung betrifft ein Verfahren zur Keimreduktion in Mehl enthaltenden Halbfertigprodukten.

Die Umgestaltung der Ernährungsgewohnheiten erfordert von der Ernährungsindustrie neue Formen der Darbietung von Lebensmitteln. Halbfertigprodukte, die leicht und schnell zum Verzehr bereitet werden können, werden vor allem von Berufstätigen bevorzugt. Solche Halbfertigprodukte werden häufig als Tiefkühlware angeboten und erfreuen sich großer Beliebtheit. Für ihre Aufbewahrung bedarf es jedoch einer entsprechenden Einrichtung, die nicht immer zur Verfügung steht.

Auch in der Nahrungsmittelindustrie wird mit solchen Halbfertigprodukten gearbeitet, deren Tiefkühlung aufgrund der vorliegenden Mengen sehr kostspielig ist.

Deshalb wären Erzeugnisse für eine schnelle Nahrungszubereitung willkommen, deren Vorratshaltung unter einfacher Kühlung möglich ist.

Gerade auf Mehlbasis werden Nahrungsmittel verschiedenster Art, wie z. B. Backwaren, Soßen, Teigwaren und Eierspeisen zubereitet. Das Mehl, das auch als Weizendunst vorliegen kann, weist naturgemäß einen hohen Gehalt an Keimen auf. Es wird aus diesem Grunde versucht, Mehl für Halbfertigprodukte keimarm zu machen, z. B. indem man es radioaktiv bestrahlt, was jedoch vom Endverbraucher immer weniger toleriert wird. Wird Mehl mit Flüssigkeiten, wie Wasser, Eiern oder Milch vermischt, so entsteht ein nahezu idealer Nährboden für die in allen diesen Produkten enthaltenen Keime. So entstandene Halbfertigprodukte, wie z. B. Teige, werden deshalb möglichst kurz bei Raumtemperatur gelagert und dann bis zur Verwendung tiefgekühlt oder direkt gebacken, wobei durch die Ofenhitze die Mikroorganismen im Innern des Backwerkes abgetötet werden.

Verfahren zum Haltbarmachen von Volleimasse, Milch, Fruchtsaft oder alkoholfreien Getränken mittels Druckbehandlung sind aus der DE-OS 3734025 bekannt.

Es gibt jedoch bis auf die radioaktive Bestrahlung kein Pasteurisierungs-Verfahren, das eine Haltbarmachung von mehlhaltigen Halbfertigprodukten für normale Kühlung in Kühlschränken ermöglicht.

Aufgabe der Erfindung ist es somit, ein Verfahren zur Keimreduktion in Mehl enthaltenden Halbfertigprodukten zu entwickeln, das preiswert und ohne Qualitätseinbußen anzuwenden ist.

Diese Aufgabe wird erfindungsgemäß dadurch gelöst, daß aus dem Mehl und einer Flüssigkeit eine Suspension hergestellt wird und daß diese Suspension mit einem ihr gegenüber inerten Gas unter einem zwischen 2 und 100 bar liegenden Druck 5 bis 240 Minuten lang behandelt wird.

Eine Weiterbildung der Erfindung ist, daß als Flüssigkeit für die Suspensionsbildung Wasser verwendet wird.

Es ist auch sinnvoll, daß als Flüssigkeit für die Suspensionsbildung Eier verwendet werden.

Weiterhin ist es im Rahmen der Erfindung, daß als Flüssigkeit für die Suspensionsbildung Milch verwendet wird.

Außerdem ist es erfindungsgemäß, daß als Flüssigkeit für die Suspensionsbildung eine Mischung von Wasser und Eiern verwendet wird.

Eine andere Ausbildung der Erfindung ist, daß als Flüssigkeit für die Suspensionsbildung eine Mischung von Wasser und Milch verwendet wird.

Vorteilhaft ist es auch, daß als Flüssigkeit für die Suspensionsbildung eine Mischung von Milch und Eiern verwendet wird.

Weiterhin ist vorgesehen, daß als Flüssigkeit für die Suspensionsbildung eine Mischung von Milch, Eiern und Wasser verwendet wird.

Gemäß der Erfindung kann auch die Mehl-Flüssigkeits-Suspension mehrmals mit Druck beaufschlagt und wieder entspannt werden.

Eine Ausführung der Erfindung ist dadurch gekennzeichnet, daß am Ende der Druckbehandlung ein schnelles Entspannen erfolgt.

Erfindungsgemäß ist weiterhin vorgesehen, daß das inerte Gas Kohlendioxid ist.

Im Rahmen der Erfindung liegt es auch, daß die Suspension durch Rühren homogenisiert wird.

Nach einer Weiterbildung der Erfindung ist vorgesehen, daß der Suspension tierisches oder pflanzliches Fett zugegeben wird.

Schließlich ist es sinnvoll, daß der Suspension Zutaten wie Zucker, Salz, Aromastoffe zugegeben werden.

Der Vorteil der Erfindung besteht im wesentlichen darin, daß durch das Druckbehandeln der Suspension mit dem ihr gegenüber inerten Gas alle Keime deutlich reduziert werden und pathogene Keime abgetötet werden, ohne daß eine Kontaminationsgefahr für das Halbfertigprodukt besteht.

Im folgenden wird ein Ausführungsbeispiel der Erfindung, ein Crêpes-Teig, beschrieben.

Mehl wird mit Eiern und mit Mineralwasser zu einer Suspension verrührt. Es wird Salz zugegeben und die entstehende Mischung weiter gerührt. Während zweier Stunden wird nun das Halbfertigprodukt mit Kohlendioxid unter 60 bar bei 40 ° C behandelt. Anschließend wird schnell entspannt. Durch diese Behandlung werden überraschend in dem nun steril zu verpackenden Crêpes-Teig alle Keime so reduziert, daß der Teig im Kühlschrank statt in der Tiefkühltruhe bis zu seiner weiteren Verwendung gelagert werden kann. Dies erfolgt jedoch nur durch die neue Druckbehandlung einer Flüssigphase.

Statt Kohlendioxid können auch andere inerte, physiologisch unbedenkliche Gase wie bis zu 3 Kohlenstoffatome enthaltende Alkane und Alkene, Distickstoffoxid, Schwefelhexafluorid, Edelgase, Stickstoff, bei hohen Drücken auch Sauerstoff und Luft, alle einzeln oder in Mischungen. Kohlendioxid zeichnet sich allerdings dadurch aus, daß es keinen lebensmittelrechtlichen Beschränkungen unterliegt und preisgünstig in hoher Reinheit und in großen Mengen verfügbar ist.

Außer dem obengenannten Crêpes-Teig kommt jede Mehl und Flüssigkeit enthaltende Mischung, wie Brotteige, Nudelteige oder Soßenvorprodukte bzw. Soßen für die Keimreduzierung nach der Erfindung in Frage, da in der Regel die in solchen Halbfertigprodukten vorhandene Flüssigkeitsmenge ausreichend ist.

Das Verfahren hat neben hoher Effizienz den Vorteil, die Stoffe kaum zu verändern. Der natürliche Zustand bleibt somit weitestgehend erhalten.

## Patentansprüche

1. Verfahren zur Keimreduktion in Mehl enthaltenden Halbfertigprodukten, dadurch **gekennzeichnet**, daß aus dem Mehl und einer Flüssigkeit eine Suspension hergestellt wird und daß diese Suspension mit einem ihr gegenüber inerten Gas unter einem zwischen 2 und 100 bar liegenden Druck 5 bis 240 Minuten lang behandelt wird.

2. Verfahren nach Anspruch 1, dadurch **gekennzeichnet**, daß als Flüssigkeit für die Suspensionsbildung Wasser verwendet wird.

3. Verfahren nach Anspruch 1, dadurch **gekennzeichnet**, daß als Flüssigkeit für die Suspensionsbildung Eier verwendet werden.

4. Verfahren nach Anspruch 1, dadurch **gekennzeichnet**, daß als Flüssigkeit für die Suspensionsbildung Milch verwendet wird.

5. Verfahren nach Anspruch 1, dadurch **gekennzeichnet**, daß als Flüssigkeit für die Suspensionsbildung eine Mischung von Wasser und Eiern verwendet wird.

6. Verfahren nach Anspruch 1, dadurch **gekennzeichnet**, daß als Flüssigkeit für die Suspensionsbildung eine Mischung von Wasser und Milch verwendet wird.

7. Verfahren nach Anspruch 1, dadurch **gekennzeichnet,** daß als Flüssigkeit für die Suspensionsbildung eine Mischung von Milch und Eiern verwendet wird.

8. Verfahren nach Anspruch 1, dadurch **gekennzeichnet**, daß als Flüssigkeit für die Suspensionsbildung eine Mischung von Milch, Eiern und Wasser verwendet wird.

9. Verfahren nach einem oder mehreren der vorhergehenden Ansprüche, dadurch **gekennzeichnet**, daß die Mehl-Flüssigkeits-Suspension mehrmals mit Druck beaufschlagt und wieder entspannt wird.

10. Verfahren nach einem oder mehreren der vorhergehenden Ansprüche, dadurch **gekennzeichnet**, daß am Ende der Druckbehandlung ein schnelles Entspannen erfolgt.

11. Verfahren nach einem oder mehreren der vorhergehenden Ansprüche, dadurch **gekennzeichnet**, daß das inerte Gas Kohlendioxid ist.

12. Verfahren nach einem oder mehreren der vorhergehenden Ansprüche, dadurch **gekennzeichnet**, daß die Suspension durch Rühren homogenisiert wird.

13. Verfahren nach einem oder mehreren der vorhergehenden Ansprüche, dadurch **gekennzeichnet**, daß der Suspension tierisches oder pflanzliches Fett zugegeben wird.

14. Verfahren nach einem oder mehreren der vorhergehenden Ansprüche, dadurch **gekennzeichnet**, daß der Suspension Zutaten wie Zucker, Salz, Aromastoffe zugegeben werden.

## Claims

1. A process for germ reduction in semi-prepared products containing flour, characterised in that a suspension is produced from the flour and a liquid and in that this suspension is treated for 5 to 240 minutes under a pressure lying between 2 and 100 bar by means of a gas which is inert with regard to the suspension.

2. A process in accordance with Claim 1, characterised in that water is used as a liquid to form the suspension.

3. A process in accordance with Claim 1, characterised in that eggs are used as a liquid to form the suspension.

4. A process in accordance with Claim 1, characterised in that milk is used as a liquid to form the suspension.

5. A process in accordance with Claim 1, characterised in that a mixture of water and eggs is used as a liquid to form the suspension.

6. A process in accordance with Claim 1, characterised in that a mixture of water and milk is used as a liquid to form the suspension.

7. A process in accordance with Claim 1, characterised in that a mixture of milk and eggs is used as a liquid to form the suspension.

8. A process in accordance with Claim 1, characterised in that a mixture of milk, eggs and water is used as a liquid to form the suspension.

9. A process in accordance with one or a plurality of the preceding Claims, characterised in that the flour and liquid suspension is repeatedly acted upon by pressure and relieved of pressure again.

10. A process in accordance with one or a plurality of the preceding Claims, characterised in that a rapid relief of pressure takes place at the end of the pressure treatment.

11. A process in accordance with one or a plurality of the preceding Claims, characterised in that the inert gas is carbon dioxide.

12. A process in accordance with one or a plurality of the preceding Claims, characterised in that the suspension is homogenised by agitation.

13. A process in accordance with one or a plurality of the preceding Claims, characterised in that animal or vegetable fat is added to the suspension.

14. A process in accordance with one or a plurality of the preceding Claims, characterised in that ingredients such as sugar, salt, flavouring substances are added to the suspension.

## Revendications

1. Procédé de réduction des germes dans des produits semi-préparés contenant de la farine, caractérisé en ce qu'il consiste à préparer une suspension à partir de farine et d'un liquide et à traiter cette suspension par un gaz inerte par rapport à celle-ci sous une pression comprise entre 2 et 100 bar et pendant 5 à 240 minutes.

2. Procédé suivant la revendication 1, caractérisé en ce qu'il consiste à utiliser de l'eau comme liquide pour former la suspension.

3. Procédé suivant la revendication 1, caractérisé en ce qu'il consiste à utiliser des oeufs comme liquide pour former la suspension.

4. Procédé suivant la revendication 1, caractérisé en ce qu'il consiste à utiliser du lait comme liquide pour former la suspension.

5. Procédé suivant la revendication 1, caractérisé en ce qu'il consiste à utiliser un mélange d'eau et d'oeufs comme liquide pour former la suspension.

6. Procédé suivant la revendication 1, caractérisé en ce qu'il consiste à utiliser un mélange d'eau et de lait comme liquide pour former la suspension.

7. Procédé suivant la revendication 1, caractérisé en ce qu'il consiste à utiliser un mélange de lait et d'oeufs comme liquide pour former la suspension.

8. Procédé suivant la revendication 1, caractérisé en ce qu'il consiste à utiliser un mélange de lait, d'oeufs et d'eau comme liquide pour former la suspension.

9. Procédé suivant l'une ou plusieurs des revendications précédentes, caractérisé en ce qu'il consiste à mettre la suspension de farine et de liquide sous pression et à la redétendre plusieurs fois.

10. Procédé suivant l'une ou plusieurs des revendications précédentes, caractérisé en ce qu'il consiste à effectuer une détente rapide à la fin du traitement sous pression.

11. Procédé suivant l'une ou plusieurs des revendications précédentes, caractérisé en ce que le gaz inerte est du dioxyde de carbone.

12. Procédé suivant l'une ou plusieurs des revendications précédentes, caractérisé en ce qu'il consiste à homogénéiser la suspension par brassage.

13. Procédé suivant l'une ou plusieurs des revendications précédentes, caractérisé en ce qu'il consiste à ajouter à la suspension de la matière grasse animale ou végétale.

14. Procédé suivant l'une ou plusieurs des revendications précédentes, caractérisé en ce qu'il consiste à ajouter à la suspension des ingrédients comme du sucre, du sel, des substances aromatisées.
